# EUROPEAN PATENT APPLICATION

(11) **EP 0 880 982 A1**
(43) Date of publication of application: **02.12.1998**
(21) Application number: 97303587.6
(22) Date of filing: 27.05.1997
(51) Int. Cl.: A63F 9/00, A63F 9/22

(54) **Improved link structure for hand held game devices**

(71) Applicant: Series Technology Co., Ltd., Taipei (TW)
(72) Inventor: Lee, Ching-Kuo, Taipei (TW)
(74) Representative: MacGregor, Gordon

(57) **Abstract**

An improved link structure for hand held game devices linkable without limitation of number of the devices, the structure has at least on the left and the right sides (35, 37) or the upper and the lower edges (31, 33) of each hand held game device couples of output and input terminals (311, 312, 331, 332), the terminals (311, 312) on the upper edge (31) are located oppositely and in countrary sequence to and conincedently in shape with those (331, 332) on the lower edge (33), this is to allow the upper edge to connect with any other lower edge (33) with the same construction and same arrangement of output and input terminals (331, 332) as those of the lower edge (33) of this device; and the terminals (351, 352, 371, 372) on the left side (35) are also located in a similar way as above stated directing to those of the right side (37), this is to allow the left side (35) to connect with any other right side (37) in a similar way as above stated.

## Description

The present invention is related to an improved link structure for hand held game devices, and especially to a link structure particularily suitable for multiple game devices linking together without limitation of amount and direction, this is beneficial to transferring of informations as well as large scale game playing.

Taking the widely popularized "Tetris" hand held game device as an example, the reason that it is welcome is that, the game device is conveniently portable, and can be turned on at any time and any place for playing. No matter it is in waiting a vehicle or in a watching job not relating to safety, or in the daily life such as in a normal leisure vacation, the hand held game device can almost always be taken for playing to kill boring time. Due to convenience of use and fun resided therein, plus its wide acceptability by customers, the game has been further varied through changing of the internal programing.

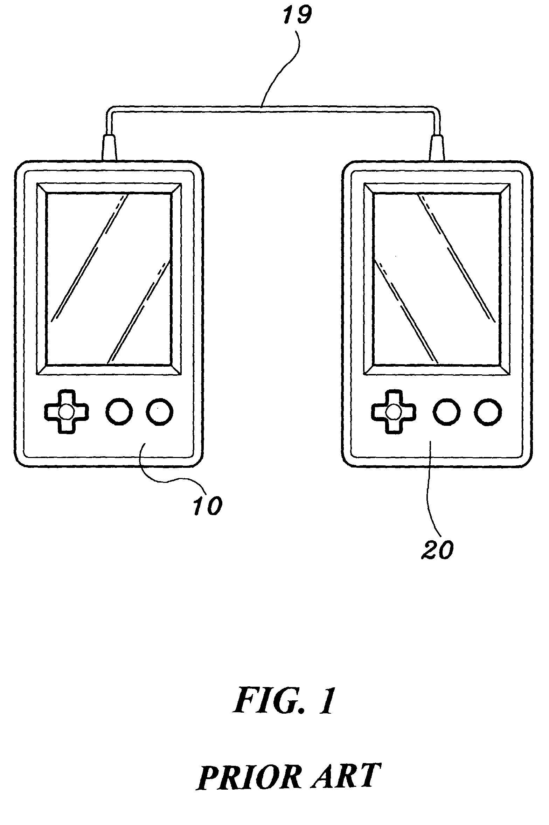

By the fact that hand held game devices can be varied in the modes of games, more than two main frames may be used, however, conventional hand held game devices mostly are used for playing games only with a single device, modes as well as functions of games therefore are limited. In the hand held game devices now prevailing, only very few of them have linking function between two main frames, and normally, only a cable or a pair of wires can be used for linking between two main frames. Such as is shown in Fig. 1, there is a conventional link structure for hand held game devices, when the two hand held game devices 10, 20 are to be linked, a cable or a couple of wires 19 are used to connect them. If the game modes designed are of larger scale, or if multiple hand held game devices must be linked for playing, such conventional link structure for hand held game devices are not adequate in application.

Therefore, the primary object of the present invention is to provide an improved link structure for hand held game devices, at least a couple of upper and lower edges or left and right sides on the housing of a main frame are provided with output and input terminals opposite to each other, so that a plurality of hand held game devices located at upper and lower and left and right positions are able to link with one another in multiple directions without limitation, this can suit various game modes, and this is the motive of the present invention.

The present invention will be apparent in its novelty as well as other characteristics after reading the detailed description of the preferred embodiments thereof in reference to the accompanying drawings.

In the drawings:
Fig. 1 is a schematic view showing linking between two conventional hand held game devices;
Fig. 2 is a front view of a preferred embodiment of the present invention;
Fig. 3 is a schematic view showing horizontal linking of the present invention;
Fig. 4 is a schematic view showing another horizontal linking of the present invention;
Fig. 5 is a schematic view showing vertical linking of the present invention;
Fig. 6 is a schematic view showing another vertical linking of the present invention;
Fig. 7 is a schematic view showing two-way linking of multiple devices of the present invention;
Fig. 8 is a schematic view showing linking with an adaptor in the present invention.

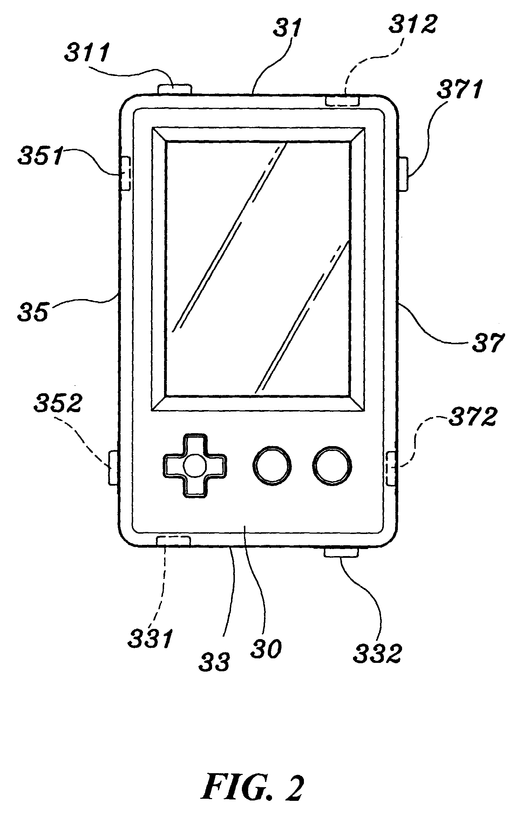

Referring to Fig. 2, taking a hand held game device 30 having a control knob and a screen as an example, the main feature of the present invention is resided in the peripheral edges 31, 33, 35, 37 each having a couple of mutually opposite output and input terminals. The upper edge 31 has an output terminal 311 near the left end thereof, and an input terminal 312 near the right end thereof; the lower edge 33 opposite thereto has at the similar positions an input terminal 331 (near the left end thereof) and an output terminal 332 (near the right end thereof). Similarly, the upper end of the left side 35 of the device has an input terminal 351, while the lower end thereof has an output terminal 352; the right side 37 opposite thereto has near the upper end thereof an output terminal 371, and has near the lower end thereof an input terminal 372; that is to say, the opposite edges in the peripheral edges 31, 33, 35, 37, i.e., the upper edge 31 and the lower edge 33, as well as the left side 35 and the right side 37, have at their corresponding positions output and input terminals arranged countrarily with respect to each other.

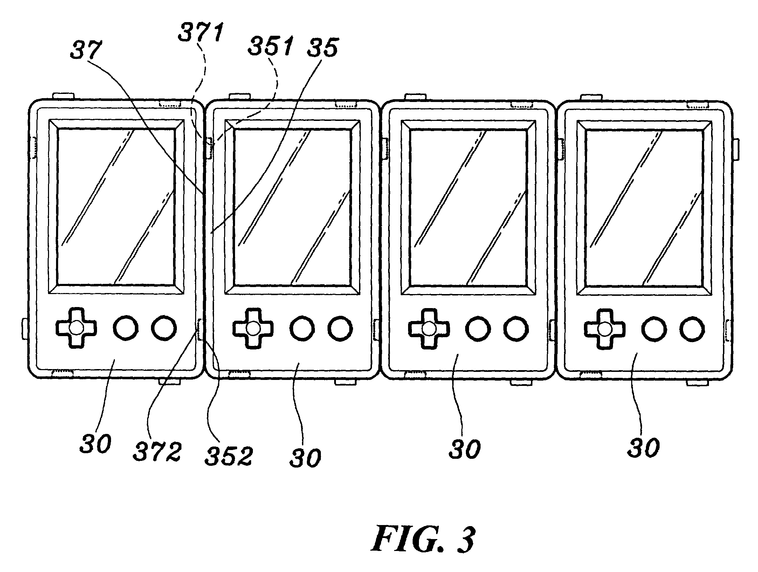

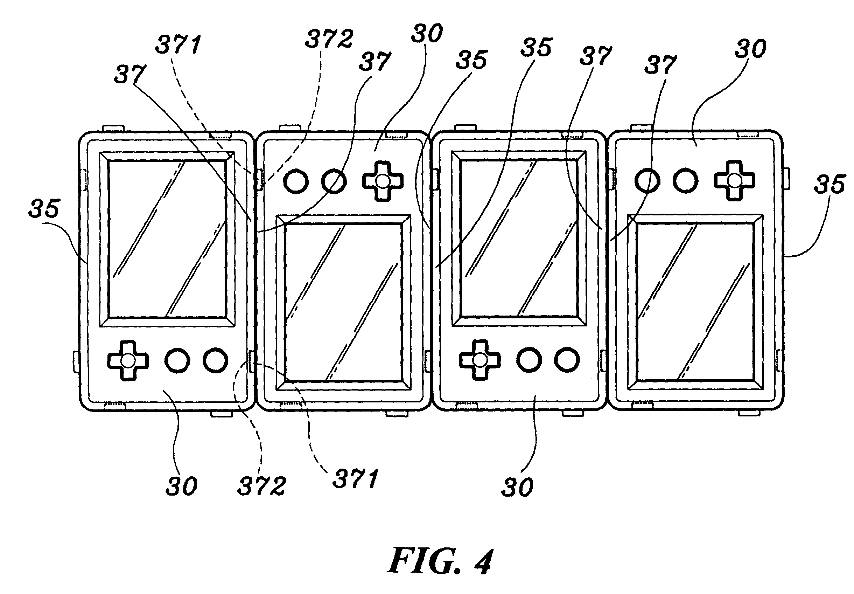

As shown in Fig. 3, when it is to link horizontally, every two neighboring devices 30 are linked in the same direction, the output terminal 371 of the right side ( edge) 37 on a device is to insert into the input terminal 351 on the left side 35 of the neighboring device thereto, while the lower input terminal 372 thereof is to receive therein the lower output terminal 352 of the neighboring device. In this way, multiple hand held game devices 30 can be linked mutually unlimitedly in the horizontal direction. In another embodiment shown in Fig. 4, every two neighboring devices 30 are abutted with each other, so that the left side 35 and the right side 37 of the neighboring devices are abutted with the input and output terminals respectively thereon arranged countrarily, with such abuttment of the neighboring sides, the upper and the lower output terminals 371, 352 can be inserted into the input terminals 351, 372 respectively, in this way, multiple hand held game devices 30 can be inversely linked mutually unlimitedly.

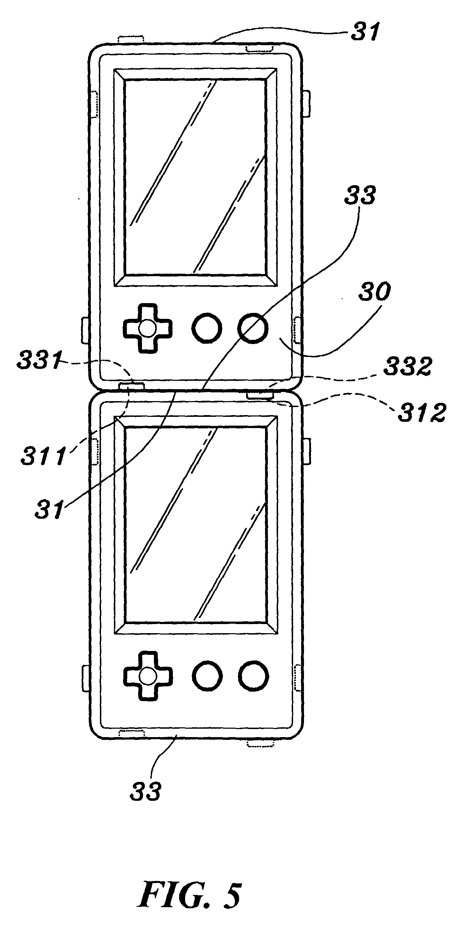

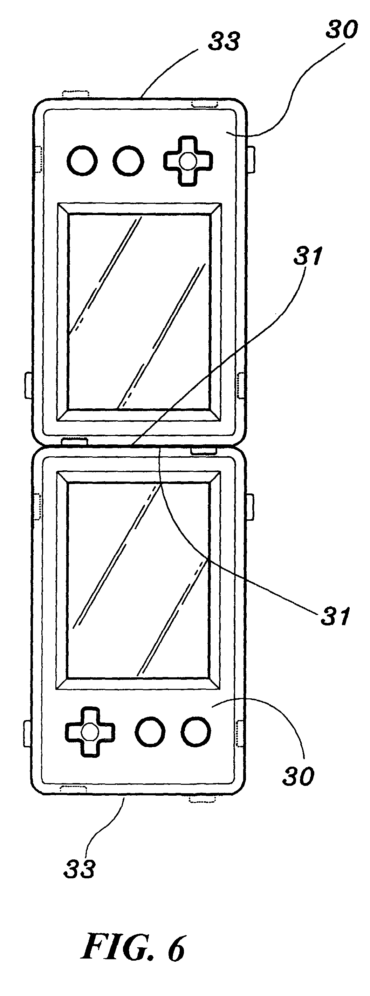

When it is to practise vertical linking in the same direction, such as is shown in Fig. 5, the output terminal 311 of the upper edge 31 on a device is to be inserted into the input terminal 331 on the lower hedge 33 of the neighboring device thereto, while the input terminal 312 thereof is to receive therein the output terminal 332 of the upper neighboring device. In this way, multiple hand held game devices 30 can be linked mutually in the vertical direction. In another embodiment shown in Fig. 6, every two neighboring devices 30 are connected vertically in countrary directions, so that the upper edge 31 and the lower edge 33 of the upper neighboring device are abutted with each other.

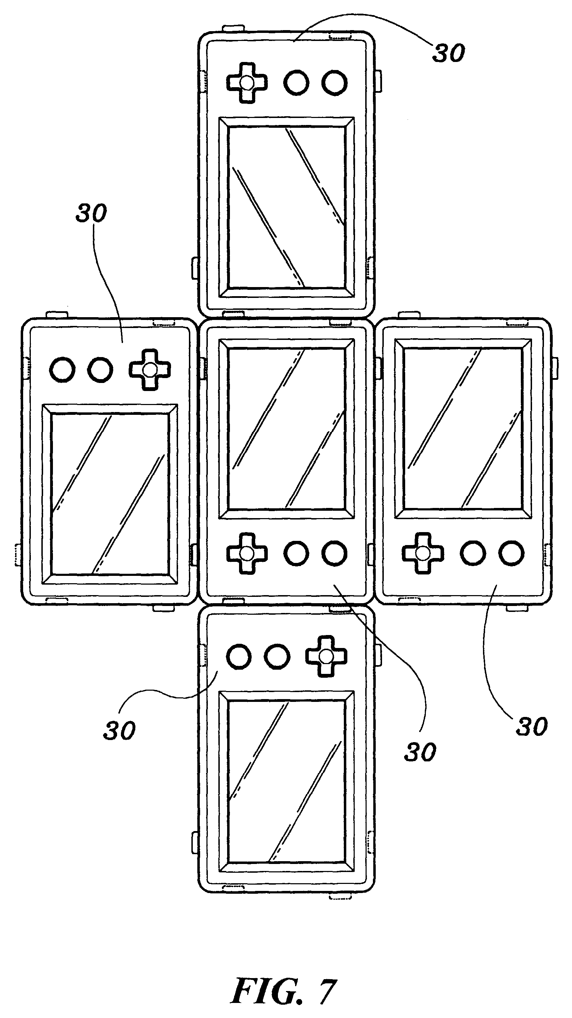

As shown in Fig. 7, multiple hand held game devices 30 can be normally, inversely, horizontally as well as vertically linked mutually into a large area style device group for proceeding large scale game programs.

In the above mentioned embodiment, a main frame 30 is provided on the four edges thereof with output and input terminals for linking, however, this is only for illustrating a preferred embodiment of the present invention, in various different game designing, if only one couple, say, the upper edge 31 and the lower edge 33 or the left side 35 and the right side 37 are provided with a set of countrarily arranged output and input terminals, the function of linking multiple hand held game devices 30 can also be achieved.

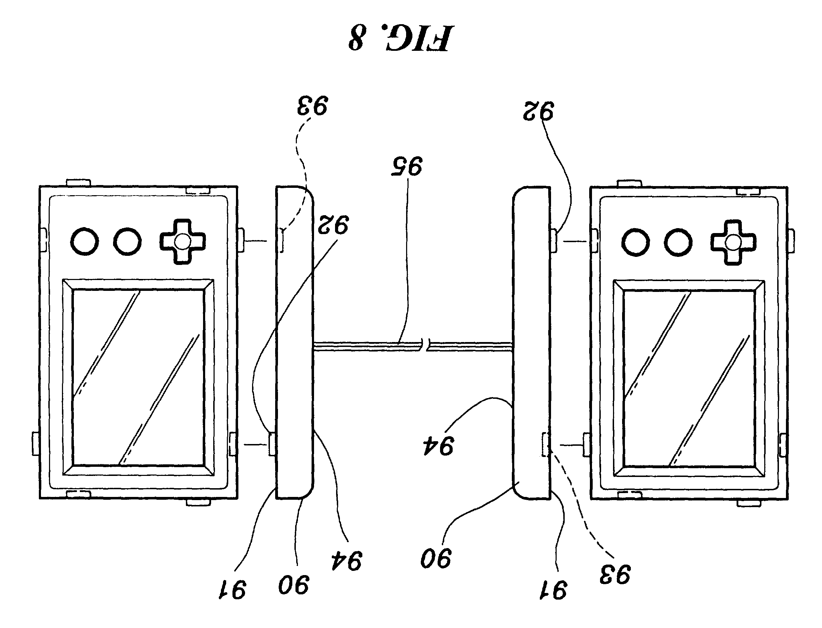

Referring now to Fig. 8, this is one more embodiment of the present invention, wherein, a plurality of adaptors 90 can be provided, which adaptors 90 each can be provided on one side 91 thereof with an output terminal 92 and an input terminal 93, while the other side 94 thereof can be connected by a cable 95. Each side 91 having the output terminals and input terminals 92, 93 can be connected to a main frame 30, so that the main frames 30 can be remotely controlled from a long distance away. Following the ways stated above, multiple main frames can also be unlimitedly linked in other directions.

Multiple hand held game devices 30 can be normally, inversely, horizontally as well as vertically linked mutually due to the countrarily arranged output and input terminals provided on the upper, the lower, the left and the right edges of the main frames, function of the present invention is largely increased in comparison with the conventional hand held game devices which can only make linking between two hand held game devices in a limited mode, the hand held game devices of the present invention provide abundance of variety with marvelous effect of use, and thus the present invention has industrial value.

Having now particularly described and ascertained the nature of our said invention and in what manner the same is to be performed, we declare that what we claim is:

## Claims

1. An improved link structure for hand held game devices, especially suitable for multi-directional interlinking of multiple game devices and for variant as well as large scale game playing, each of said hand held game devices having on a surface thereof a control knob and a screen, said structure is comprised of:
couples of output and input terminals provided at least on a couple of sides or edges, i.e., the left and the right sides or the upper and the lower edges of each main frame of each said hand held game device, wherein, a couple of said output and input terminals on the left and the right of said upper edge are located oppositely and in countrary sequence to and conincedently in shape with those on said lower edge, this is to allow said upper edge to connect with any other lower edge with the same construction and same arrangement of a couple of output and input terminals as those of said lower edge of said main frame; and said output and input terminals on the upper and the lower of said left side are also located oppositely and in countrary sequence to and conincedently in shape with those on said right side, this is to allow said left side to connect with any other right side with the same construction and same arrangement of a couple of output and input terminals as that of said right side of said main frame.

2. A hand held electronic game device electronically linkable with another such device, the device having a casing with opposite, elongate side faces (31,33), each said side face having an input terminal connector (312,331) and an output terminal connector (311,332) longitudinally spaced from the input terminal connector, the input terminal connector (312) of one face (31) being aligned with the output terminal connector (332) of the opposite face (33), and the output terminal connector (311) of one face (31) being aligned with the input terminal connector (331) of the opposite face, each input terminal connector being connectable with each output terminal connector of another such device, whereby a plurality of such devices can be connected together and electronically interlinked.

3. A device according to Claim 2, wherein each connector is spaced from the nearer end of the respective face by the same distance as the other connectors.

4. A device according to Claim 2 or 3, wherein the casing is rectangular and each of the intervening side faces (35) between said opposite, elongate side faces (31,33) also carries input and output terminal connectors (351,352) aligned respectively with output terminal connectors (371,372) of the other intervening side face (37).

5. An array of devices according to Claim 2, 3 or 4, comprising two or more devices connected in alignment by means of the terminal connectors (311,312,371,372,332,331,352,351).

6. An array according to Claim 5, wherein the input and output terminal connectors (371,372) of one side face (37) of one device are connected to the output and input terminal connectors respectively (371,372) of the equivalent side face (37) of another device, the devices being relatively inverted.

7. An array according to Claim 5 or 6, comprising devices connected to the terminal connectors (311,312;371,372) of at least two relatively perpendicular faces of another device.

8. A device according to Claim 2, 3 or 4, in combination with an adaptor (94) having a face (91) with input and output terminal connectors (92,93), connectable to the terminal connectors of at least one face of the device, and having an electrical cable coupled to the terminals of the adaptor.

9. A device and adaptor combination according to Claim 8, wherein the electric cable extends from a face (94) of the adaptor opposite to the face (91) of the adaptor with the terminal connectors (92,93).
